(19) **Europäisches Patentamt**
**European Patent Office**
**Office européen des brevets**

(11) **EP 3 209 084 B1**

(12) **EUROPEAN PATENT SPECIFICATION**

(45) Date of publication and mention
of the grant of the patent:
**31.10.2018  Bulletin 2018/44**

(51) Int Cl.:
*H04W 72/12* $^{(2009.01)}$      *H04W 88/06* $^{(2009.01)}$

(21) Application number: **17165619.2**

(22) Date of filing: **20.07.2011**

(54) **APPARATUS AND METHOD FOR ACTIVITY COORDINATION IN MULTI-RADIO TERMINALS**

VORRICHTUNG UND VERFAHREN ZUR AKTIVITÄTSKOORDINIERUNG IN MEHRFUNKENDGERÄTEN

APPAREIL ET PROCÉDÉ DE COORDINATION D'ACTIVITÉ DANS LES TERMINAUX MULTI-RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.07.2010  US 365891 P**
       **22.10.2010  US 925475**

(43) Date of publication of application:
**23.08.2017  Bulletin 2017/34**

(62) Document number(s) of the earlier application(s) in accordance with Art. 76 EPC:
**11809283.2 / 2 596 676**

(73) Proprietor: **MediaTek Inc.**
**Hsin-Chu 300 (TW)**

(72) Inventors:
• **Ko, Li-Chun**
  **105 Taipei City (TW)**
• **Hsu, Hong-Kai**
  **234 New Taipei City (TW)**
• **Fu, I-Kang**
  **110 Taipei City (TW)**
• **Lee, Chi-Chen**
  **110 Taipei City (TW)**

(74) Representative: **Habermann, Hruschka & Schnabel**
**Patentanwälte**
**Montgelasstraße 2**
**81679 München (DE)**

(56) References cited:
**US-A1- 2008 161 041      US-A1- 2010 061 326**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS REFERENCE TO RELATED APPLICATIONS

This application is a continuation-in-part of Application No. 12/925,475, filed on October 22, 2010, which claims benefit of U.S. Provisional Application No. 61/254,771, filed on October 26, 2009. This application also claims the benefits of U.S. Provisional Application No. 61/365,891, filed on July 20, 2010.

BACKGROUND OF THE INVENTION

Field of the Invention

The invention relates generally to coexisting designs of multiple radio modules in a wireless communication device, and more particularly to an activity coordination method for coordinating the operations of the multiple radio modules such that interference between the multiple radio modules may be efficiently reduced while saving power.

Description of the Related Art

The Institute of Electrical and Electronics Engineers (IEEE) has adopted a series of standards for both Wireless Local Area Networks (WLANs) known as 802.11 and Wireless Metropolitan Area Networks (WMANs) known as 802.16. It is commonly known that Wireless Fidelity (WiFi) refers to interoperable implementations of the IEEE 802.11 technology, and Worldwide Interoperability for Microwave Access (WiMAX) refers to interoperable implementations of the IEEE 802.16 technology. On the other hand, Bluetooth (BT) is a wireless standard for Wireless Personal Area Networks (WPANs) developed by the BT special interest group (SIG). BT provides a secure way for exchanging data over short distances using frequency-hopping spread spectrum technology. Due to scarce radio spectrum resource, different technologies are allowed to operate in overlapping or adjacent radio spectrums. For example, WiFi often operates at 2.412-2.4835GHz, WiMAX often operates at 2.3-2.4 or 2.496-2.690GHz, and BT often operates at 2.402-2.480GHz.

As the demand for wireless communication continues to increase, wireless communication devices such as cellular telephones, Personal Digital Assistants (PDAs), laptop computers, etc., are increasingly being equipped with multiple radios. A Multiple Radio Terminal (MRT) may simultaneously include BT, WiMAX, and WiFi radios. Simultaneous operation of multiple radio modules co-located on the same physical device, however, can suffer from significant degradation including significant interference therebetween because of the overlapping or adjacent radio spectrums. Due to physical proximity and radio power leakage, when the data transmission of a first radio module overlaps with the data reception of a second radio module in the same time domain, the data reception of the second radio module can be hindered due to interference from the data transmission of the first radio module. Likewise, data transmission of the second radio module can interfere with data reception of the first radio module.

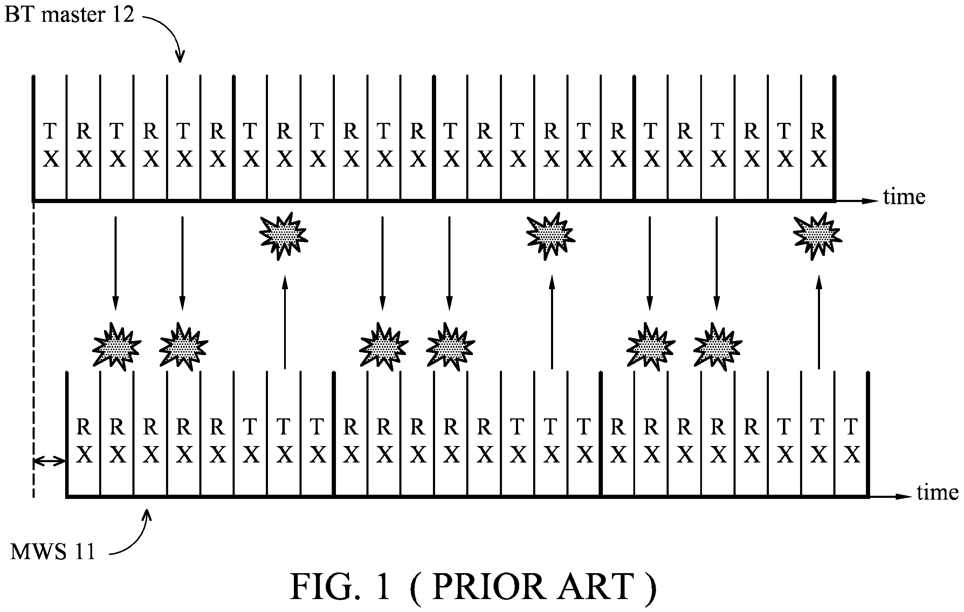

Fig. 1 is a schematic diagram illustrating interference between a Mobile Wireless System (MWS) radio module 11 and a BT master radio module 12 that are co-located in an MRT. Both of the MWS radio module 11 and the BT master radio module 12 transmit and receive data via scheduled transmitting (TX) and receiving (RX) time slots on a frame-by-frame basis. For example, in each MWS frame, the first five consecutive RX slots are scheduled for receiving operations and the three consecutive TX slots are scheduled for transmitting operations. Due to the fact that the MWS radio module 11 and the BT master radio module 12 are co-located within the MRT 10, the transmission of one radio module will generally interfere with the reception of another radio module. As shown in Fig. 1, data receptions in the three RX time slots of the BT master radio module 12 are interfered by concurrent data transmissions in TX time slots of the MWS radio module 11, and data receptions in the six RX time slots of the MWS radio module 11 are interfered by concurrent data transmissions in TX time slots of the BT master radio module 12.

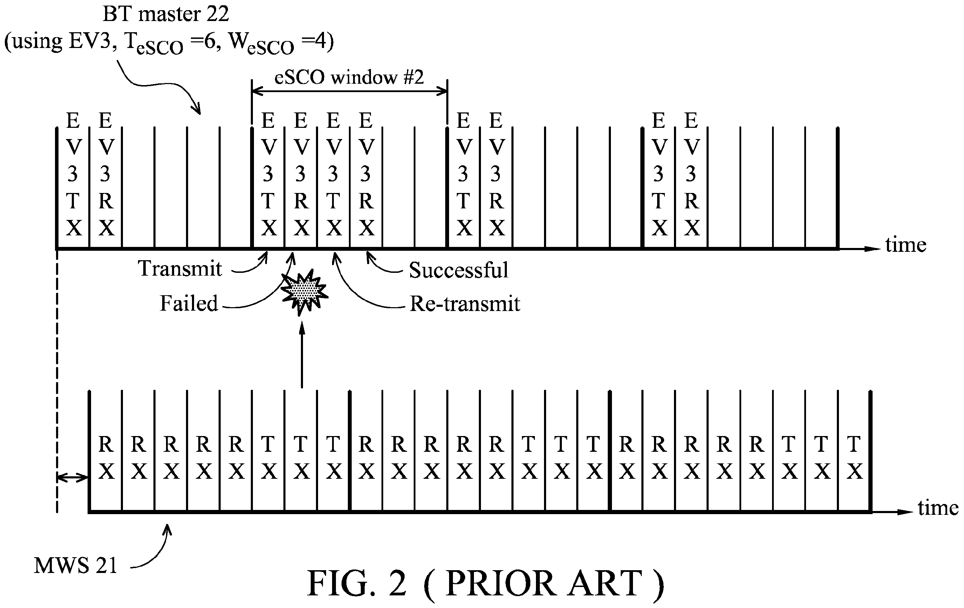

Fig. 2 is a schematic diagram illustrating traffic patterns of a BT master radio module 22 affected by a co-located MWS radio module 21. The traffic pattern of the MWS radio module 21 remains the same as the traffic pattern of the MWS radio module 11 in Fig. 1, while the BT master radio module 22 has an Extended Voice (EV3) traffic pattern using an Extended Synchronous Connection Oriented (eSCO) link with $T_{eSCO} = 6$ and $W_{eSCO} = 4$. Under such EV3 traffic pattern, the BT master radio module 22 has one scheduled TX time slot followed by one scheduled RX time slot for every six BT slots (i.e., $T_{eSCO} = 6$), and has four retransmission opportunities (i.e., $W_{eSCO} = 4$). Note that, in the example of Fig. 2, the BT master radio module 22 uses low transmission power, so that the data transmissions of the BT master radio module 22 does not interfere with the data receptions of the MWS radio module 21, but the data transmissions of the MWS radio module 21 interferes with the data receptions of the BT master radio module 22. Specifically, in eSCO window #2, the EV3 data reception in the first scheduled EV3 RX time slot is corrupted by the concurrent data transmission of the MWS radio module 21, causing the BT master radio module 22 to re-transmit the EV3 data to a BT slave in the following EV3 TX time slot and to receive EV3 data from the BT slave in the following EV3 RX time slot. For such a case, it is obvious that the BT master radio module 22 needs to consume 25% more power due to interference from the co-located MWS radio module 21.

Form US 2010/061326 A1 a method for coordinating the operation of a plurality of wireless communications services in a communications apparatus is known.

BRIEF SUMMARY OF THE INVENTION

In light of the previously described problems, it is desirable to have a solution for improving efficiency and saving power for multiple radio modules co-located within the same MRT.

One aspect of the invention discloses a wireless communication device according to claim 1.

Another aspect of the invention discloses an activity coordination method for a wireless communication device according to claim 7.

Further, preferred embodiments are described in the dependent claims.

BRIEF DESCRIPTION OF THE DRAWINGS

The invention can be more fully understood by reading the subsequent detailed description and examples with references made to the accompanying drawings, wherein:

Fig. 1 is a schematic diagram illustrating interference between a Mobile Wireless System (MWS) radio module 11 and a BT master radio module 12 that are co-located in an MRT 10;

Fig. 2 is a schematic diagram illustrating traffic patterns of a BT master radio module 22 affected by a co-located MWS radio module 21;

Fig. 3 is a block diagram illustrating a Multi-Ratio Terminal (MRT) 32 in a wireless communication system 30 according to an embodiment of the invention;

Fig. 4 is a schematic diagram illustrating the BT radio module 46 selectively skipping scheduled time slots according to an embodiment of the invention;

Fig. 5 is a block diagram illustrating an exemplary generation of RX/TX CLC bitmaps according to the embodiment of Fig. 4;

Fig. 6 is a block diagram illustrating an exemplary generation of RX/TX CLC bitmaps according to another embodiment of the invention;

Fig. 7 is a block diagram illustrating an exemplary generation of RX/TX CLC bitmaps according to yet another embodiment of the invention;

Fig. 8 is a message sequence chart illustrating negotiation of RX/TX CLC bitmaps according to an embodiment of the invention;

Fig. 9 is a block diagram illustrating detection of operation status changes of the MWS radio module 45 according to an embodiment of the invention;

Fig. 10 is a message sequence chart illustrating fast activation of RX/TX CLC bitmaps according to an embodiment of the invention; and

Fig. 11 is a flow chart illustrating an activity coordination method according to an embodiment of the invention.

DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

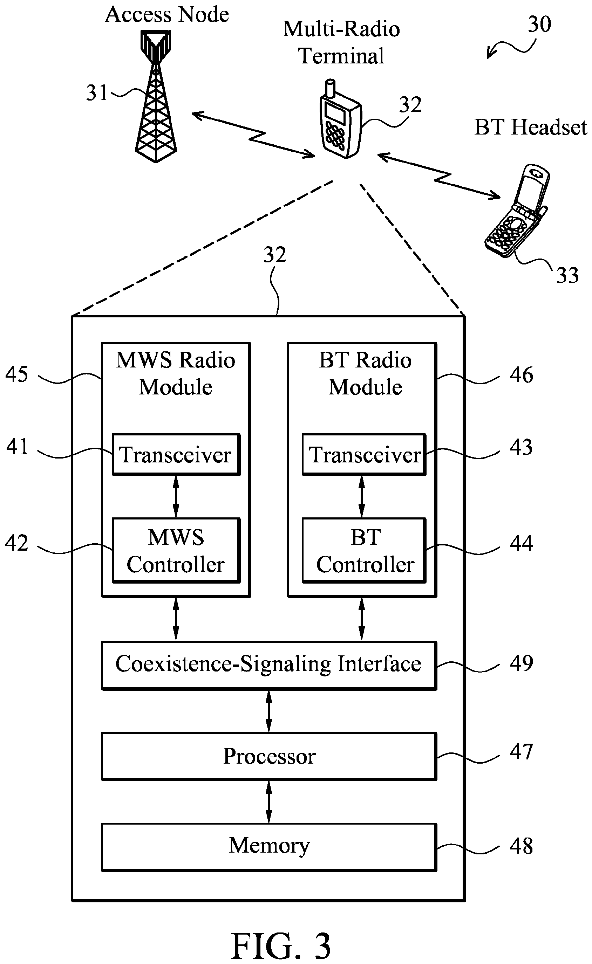

Fig. 3 is a block diagram illustrating a Multi-Ratio Terminal (MRT) 32 in a wireless communication system 30 according to an embodiment of the invention. The wireless communication system 30 comprises an access node 31, an MRT 32, and a Bluetooth (BT) headset 33. The MRT 32 includes a first radio module, e.g., a Mobile Wireless System (MWS) radio module 45, and a second radio module, e.g., a BT radio module 46. The MRT 32 communicates with the access node 31 using the MWS radio module 45, and communicates with the BT headset 33 using the BT radio module 46. The MWS radio module 45 comprises a transceiver 41 and an MWS controller 42. The BT radio module 46 comprises a transceiver 43 and a BT controller 44. The MWS controller 42 and the BT controller 44 may communicate with each other via a coexistence-signaling interface 49. The Coexistence-signaling interface 49 is also connected to a processor 47 and a memory 48 of the MRT 32. Although the coexistence signaling interface 49 is denoted as one module, it may include both hardware and software implementations of multiple functional components, such as the hardware implementation of functional component(s) for timing/synchronization controls between the MWS radio module 45 and the BT radio module 46, and the software implementation of functional component(s) for traffic information exchange between the MWS radio module 45 and the BT radio module 46, etc., and the invention is not limited thereto.

In one embodiment, the MWS radio module 45 is a WiMAX radio module that operates at 2.3-2.4 or 2.496-2.690GHz, while the BT radio module 46 operates at 2.402-2.480GHz. In another embodiment, the MWS radio module 45 is a WiFi radio module that operates at 2.412-2.4835GHz, while the BT radio module 46 operates at 2.402-2.480GHz. Simultaneous operation of multiple radio modules co-located in the same wireless communication device may suffer significant degradation including significant interference therebetween because of the overlapping or adjacent radio spectrums. This is especially true when both of the MWS radio module 45 and the BT radio module 46 use the time division multiplexing (TDM) protocol for data communications. Under the TDM mode, when a scheduled time slot for data transmission of a first radio module overlaps with a scheduled time slot for data reception of a second radio module, the data reception of the second radio module may be hindered due to interference from the data transmission of the first radio module. Likewise, the data transmission of the second radio module may interfere with the data reception of the first radio module. In order to solve this interference problem, the invention proposes an activity coordination method for coordinating the operations of the multiple radio modules such that interference between the multiple radio modules may be greatly reduced.

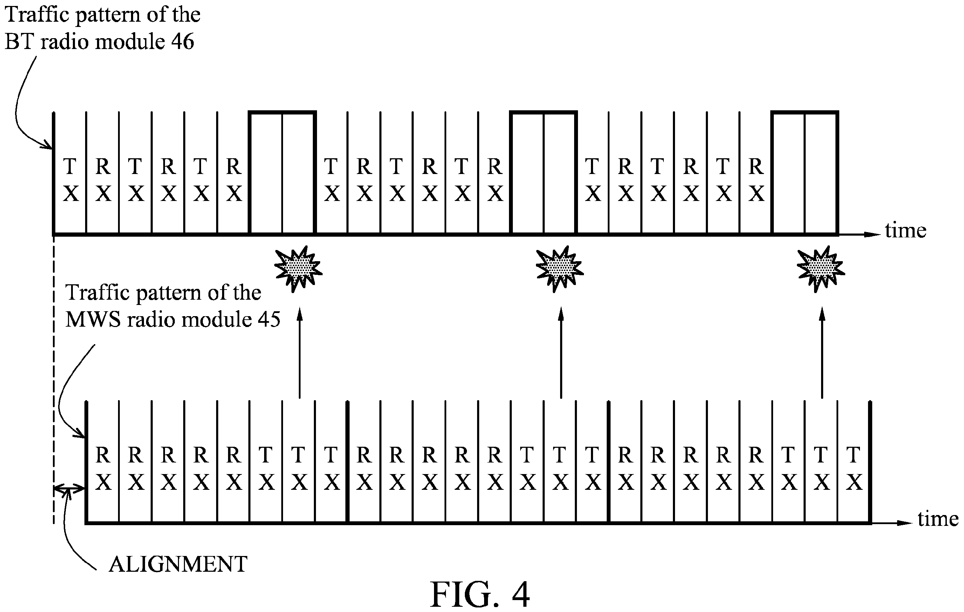

To further clarify, it is proposed for the BT radio module 46 to selectively skip one or more scheduled transmitting (TX) and/or receiving (RX) time slots to improve scheduling efficiency and thereby save power via the coexistence-signaling interface 49. Fig. 4 is a schematic diagram illustrating the BT radio module 46 selectively skipping scheduled time slots according to an embodiment of the invention. As shown in Fig. 4, the MWS radio module 45 has a typical MWS traffic pattern in which each MWS frame contains eight time slots including five consecutive RX slots followed by three consecutive TX slots. On the other hand, the BT radio module 46 is a BT master using the Time Division Duplex (TDD) scheme to communicate with a BT slave and it has an Asynchronous Connection-Oriented (ACL) traffic pattern, wherein the BT radio module 46 alternates TX and RX operations. The BT radio module 46 first aligns its communication slots with the MWS radio module 45. Specifically, the start of a packet should be aligned with the start of a slot. The BT radio module 46 then obtains the traffic pattern of the MWS radio module 45 via the coexistence-signaling interface 49. Based on the obtained traffic pattern, the BT radio module 46 deliberately gives up certain scheduled TX and RX slots (denoted with a thick-lined box) that will be affected by the co-located MWS radio module 45 to save power, since the data reception in the thick-lined box is estimated to be unsuccessful due to the interference from the data transmission of the MWS radio module 45. Also, the BT radio module 46 generates RX/TX Co-Located Coexistence (CLC) bitmaps according to the traffic pattern of the MWS radio module 45, and negotiates with the BT headset 33 for the RX/TX CLC bitmap so that the BT headset 33 may obtain the RX/TX CLC bitmap and also skip data transmission or reception in certain time slots affected by the MWS radio module 45. During the skipped time slots, TX or RX operation is given up by disabling or turning off the transceiver 46 to save power consumption.

In one embodiment, the BT radio module 46 may selectively give up one or more scheduled TX slots if a corresponding acknowledgement of the transmitted data is estimated to not have been received successfully due to interference from the co-located MWS radio module 45, and similarly, the BT headset 33 may selectively give up one or more scheduled TX slots if it is estimated that the data to be transmitted would not be received by its peer BT device successfully. In another embodiment, the BT radio module 46 may selectively give up one or more scheduled TX slots if it is estimated that data transmission in the TX slots would interfere with data reception of the co-located MWS radio module 45. In yet another embodiment, the BT radio module 46 may selectively give up one or more scheduled RX slots if the receiving operation is affected by interference from the co-located MWS radio module 45, and similarly, the BT headset 33 may selectively give up one or more scheduled RX slots if it is estimated that its peer BT device will not transmit data in the RX slots.

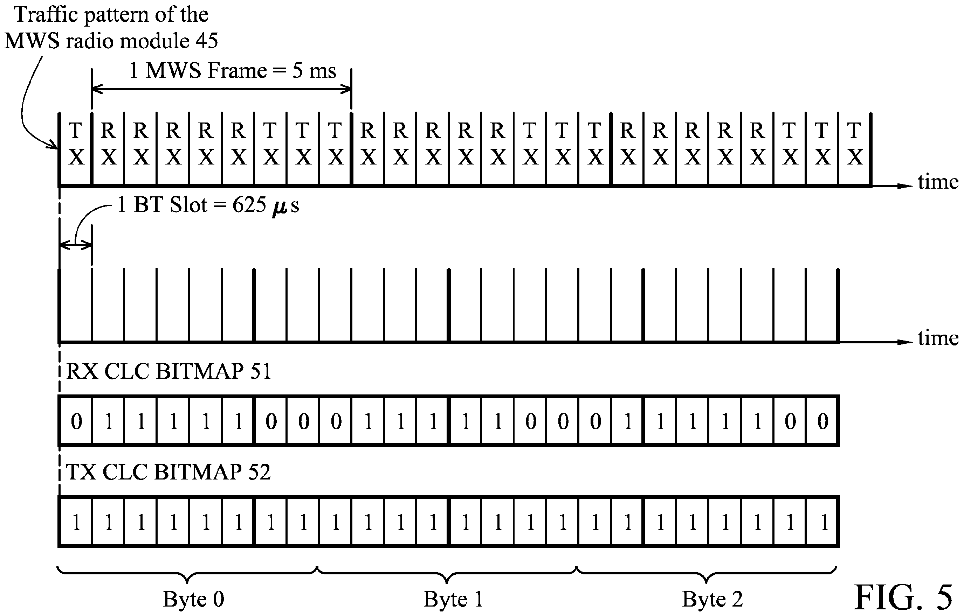

Fig. 5 is a block diagram illustrating an exemplary generation of RX/TX CLC bitmaps according to the embodiment of Fig. 4. In this embodiment, the data transmission of the BT radio module 46 does not interfere with the data reception of the MWS radio module 45, due to the fact that the BT radio module 46 operates in a hybrid mode in which relatively low transmission power is used or the MWS radio module 45 and the BT radio module 46 are equipped with an RX filter and a TX filter, respectively, to resist mutual interference. As shown in Fig. 5, each MWS frame is 5 milliseconds in length and contains eight time slots including five RX slots followed by three TX slots. Each BT slot is 625 microseconds in length. After frame synchronization, the MWS frames are aligned with BT slots in the time domain. Since every 24 BT slots are aligned with three MWS frames and the traffic pattern of the MWS radio module repeats for every frame, a 24-bits RX CLC bitmap and a 24-bits TX CLC bitmap are generated to represent the allocations of 24 forthcoming BT slots for possible data transmission or reception. However, the length of the TX/RX CLC bitmap is variable. If the data transmission of the MWS radio module 45 is estimated to interfere with the data reception of the BT radio module 46, the BT radio module 46 does not schedule data reception in any of the MWS TX slots. Accordingly, a BT RX CLC bitmap 51 is generated to indicate whether each of the 24 forthcoming BT slots may be used for receiving operations, wherein a "1" bit indicates availability for data reception and a "0" bit indicates unavailability for data reception. Similarly, a BT TX CLC bitmap 52 is generated to indicate whether each of the 24 forthcoming BT slots may be used for transmitting operations, which contains only "1" bit, for indicating availability for data transmission in all BT slots.

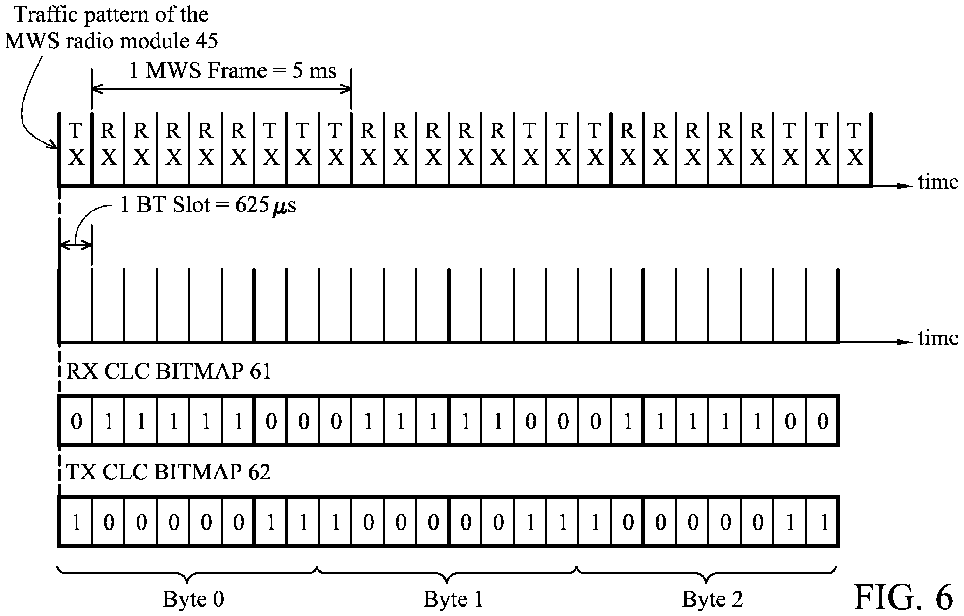

Fig. 6 is a block diagram illustrating an exemplary generation of RX/TX CLC bitmaps according to another embodiment of the invention. The MWS frames and traffic patterns in Fig. 6 is the same as the MWS frames and traffic patterns illustrated in Fig. 5. However, in this embodiment, neither the BT radio module 46 operates in a hybrid mode in which relatively low transmission power is used, nor the MWS radio module 45 and the BT radio module 46 are equipped with an RX filter and a TX filter, respectively, to resist mutual interference. Thus, the data transmission of the BT radio module 46 interferes with the data reception of the MWS radio module 45. Accordingly, the BT RX CLC bitmap 61 in Fig. 6 is the same as the BT RX CLC bitmap 51 in Fig. 5, while the BT TX CLC bitmap 62 is generated to indicate whether each of the 24 forthcoming BT slots may be used for transmitting operations, wherein a "1" bit indicates availability for data transmission and a "0" bit indicates unavailability for data transmission.

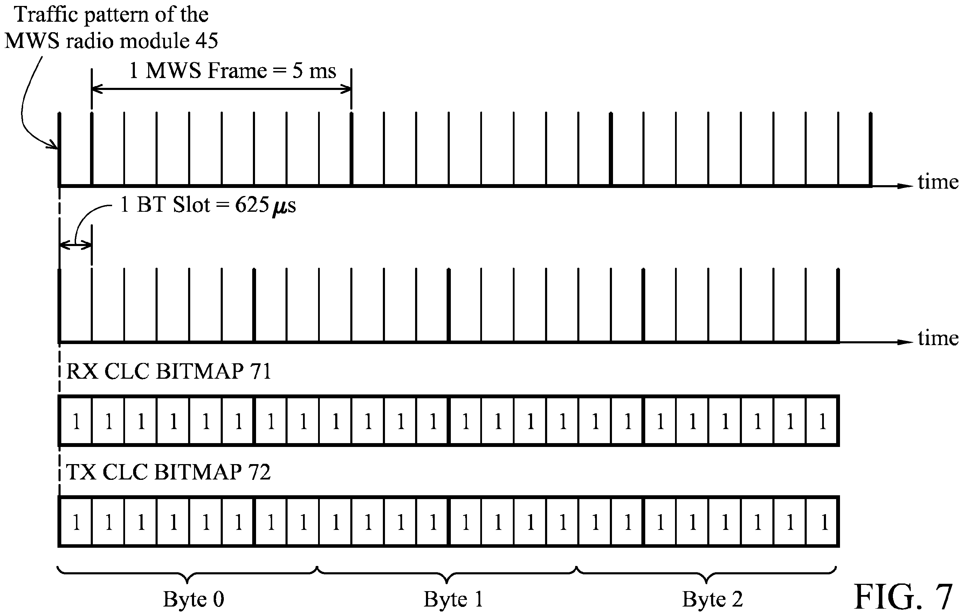

Fig. 7 is a block diagram illustrating an exemplary generation of RX/TX CLC bitmaps according to yet another embodiment of the invention. In this embodiment, the operation status of the MWS radio module 45 is configured to be inactive, and thus, no transmitting and receiving operations are to be performed. Accordingly, a BT RX CLC bitmap 71 containing only "1" bit is generated to indicate availability for data receptions in all BT slots, and a BT TX CLC bitmap 72 containing only "1" bit is generated to indicate availability for data transmissions in all BT slots.

Specifically, the RX/TX CLC bitmaps may be negotiated to the BT headset 33, together with a set index, an offset parameter $D_{CLC}$, and an interval parameter $T_{CLC}$, via a Link Manager Protocol (LMP) message (e.g., LMP_CLC_BITMAP_CONFIG), wherein the set index is an identification indicator for the transmitting RX/TX CLC bitmaps, the offset parameter $D_{CLC}$ indicates the time offset from now to the time when the RX/TX CLC bitmaps are to be applied, and the interval parameter $T_{CLC}$ indicates the length of time for using the RX/TX CLC bitmaps. In addition, the LMP message may further comprise an initialization flag for preventing clock wrap-around problems. Specifically, a "0" bit is set for the initialization flag when the Most Significant Bit (MSB) of the current master clock is 0, to indicate that an initialization procedure 1 should be used to prevent clock wrap-around problems, and a "1" bit is set for the initialization flag when the Most Significant Bit (MSB) of the current master clock is 1, to indicate that an initialization procedure 2 should be used to prevent clock wrap-around problems. The first BT slot indicated by the Least Significant Bit (LSB) of byte 0 in the RX/TX CLC bitmaps is started on the slots for which the clock satisfies the following equations:

$$CLK_{27-1} \bmod T_{CLC} = D_{CLC}$$

: for initialization procedure 1

$$((\sim CLK_{27}), CLK_{26-1}) \bmod T_{CLC} = D_{CLC}$$

: for initialization procedure 2
, wherein the clock value $CLK_{(k+1)}$ for the starting BT slot of the next RX/TX CLC bitmaps is found by adding the interval parameter $T_{CLC}$ to the clock value of the starting BT slot $CLK_{(k)}$ of the current RX/TX CLC bitmaps, as follows:

$$CLK_{(k+1)} = CLK_{(k)} + T_{CLC}$$

After different RX/TX CLC bitmaps sets, including RX/TX CLC bitmaps, a set index, an offset parameter $D_{CLC}$, and an interval parameter $T_{CLC}$, are negotiated, the BT radio module 46 may further inform the BT headset 33 about which of the negotiated CLC bitmaps sets to be used in a forthcoming period of time, via another Link Manager Protocol (LMP) message (e.g., LMP_CLC_BITMAP_REQ).

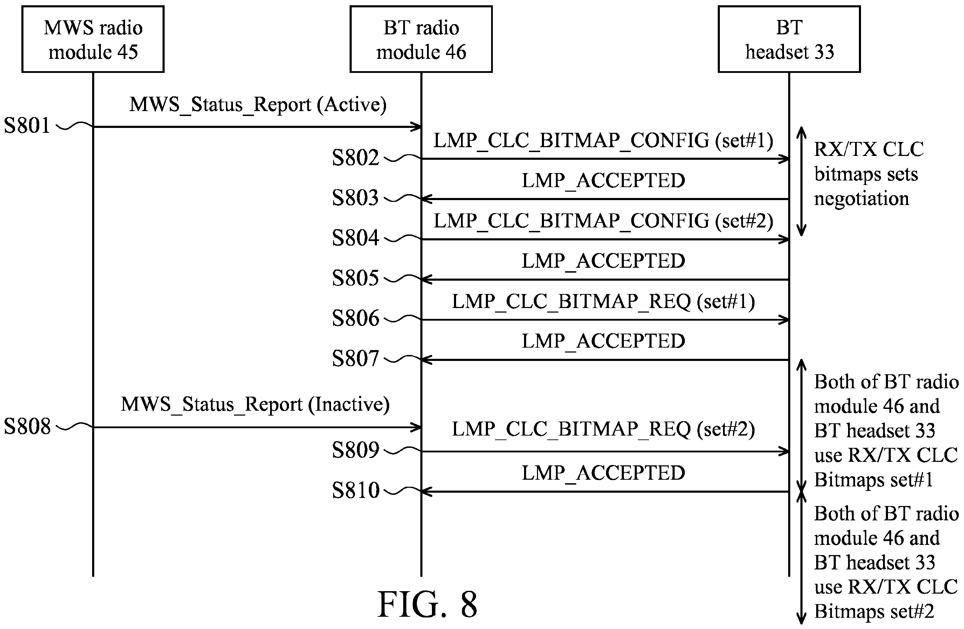

Fig. 8 is a message sequence chart illustrating negotiation of RX/TX CLC bitmaps according to an embodiment of the invention. In this embodiment, the MWS radio module 45 and the BT radio module 46 are both switched off. Later, when the MWS radio module 45 and the BT radio module 46 are switched on, the MWS radio module 45 determines its traffic patterns, including the traffic patterns for the active state and inactive state, and then transmits a notification signal to the BT radio module 46 to indicate the operation status change in a forthcoming period of time (step S801). In response to the notification signal, the BT radio module 46 obtains the traffic patterns of the MWS radio module 45 via the coexistence-signaling interface 49. Based on the obtained traffic patterns, the BT radio module 46 generates two sets of RX/TX CLC bitmaps for the co-located MWS radio module 45 being in active and inactive states (denoted as RX/TX CLC bitmaps set#1 and set#2, respectively) according to scheduled allocations of slots for the forthcoming transmitting or receiving operations, and then starts negotiating the RX/TX CLC bitmaps sets with the BT headset 33. Specifically, the BT radio module 46 first transmits the RX/TX CLC bitmaps set for active MWS radio module 45, i.e., the RX/TX CLC bitmaps set#1, to the BT headset 33 via an LMP message (e.g., LMP_CLC_BITMAP_CONFIG) (step S802). The LMP message may further comprise other related information, such as the index of the RX/TX CLC bitmaps set, an offset parameter $D_{CLC}$, an interval parameter $T_{CLC}$, and an initialization flag as mentioned above. In response to the LMP message, the BT headset 33 replies to the BT radio module 46 with an LMP response message (e.g., LMP_ACCEPTED) (step S803). In another embodiment, if the BT headset 33 does not accept the RX/TX CLC bitmaps set from the BT radio module 46, the BT headset 33 may reply to the BT radio module 46 with another LMP message containing adjusted RX/TX CLC bitmaps. Next, the BT radio module 46 transmits the RX/TX CLC bitmaps set for inactive MWS radio module 45, i.e., the RX/TX CLC bitmaps set#2, to the BT headset 33 via an LMP message (e.g., LMP_CLC_BITMAP_CONFIG) (step S804). In response to the LMP message, the BT headset 33 replies to the BT radio module 46 with an LMP response message (e.g., LMP_ACCEPTED) (step S805). Note that, the steps of negotiations may be repeated, if there are more than two RX/TX CLC bitmaps sets, until all RX/TX CLC bitmaps sets are negotiated between the BT radio module 46 and the BT headset 33. Based on the negotiation result and the notification signal, the BT radio module 46 selects the RX/TX CLC bitmaps set#1 (e.g., the RX/TX CLC bitmaps as shown in Fig. 5) to be used in a first forthcoming period of time, and then informs the BT headset 33 about the set index of RX/TX CLC bitmaps via another LMP message (e.g., LMP_CLC_BITMAP_REQ) (step S806). When receiving the LMP message, the BT headset 33 replies to the BT radio module 46 with an acknowledgement via another LMP response message (e.g., LMP_ACCEPTED) (step S807), and then uses the RX/TX CLC bitmaps set#1, for performing transmitting and/or receiving operations. When receiving the acknowledgement, the BT radio module 46 correspondingly uses the RX/TX CLC bitmaps set#1 for performing transmitting and/or receiving operations.

Subsequently, when the MWS radio module 45 detects that its operation status is about to change from active to inactive, it transmits another notification signal to the BT radio module 46 to indicate the operation status change in another forthcoming period of time (step S808). In response to the notification signal, the BT radio module 46 informs the BT headset 33 about the set index of RX/TX CLC bitmaps via another LMP message (e.g., LMP_CLC_BITMAP_REQ) (step S809). When receiving the LMP message, the BT headset 33 replies to the BT radio module 46 with an acknowledgement via another LMP response message (e.g., LMP_ACCEPTED) (step S810), and then uses the RX/TX CLC bitmaps set#2, for performing transmitting and/or receiving operations. When receiving the acknowledgement, the BT radio module 46 correspondingly uses the RX/TX CLC bitmaps set#2 for performing transmitting and/or receiving operations. Note that, if the traffic patterns of the MWS radio module 45 changes after the negotiation steps S820~S850, another negotiation of RX/TX CLC bitmaps sets may be initiated to update the RX/TX CLC bitmaps sets between the BT radio module 46 and the BT headset 33.

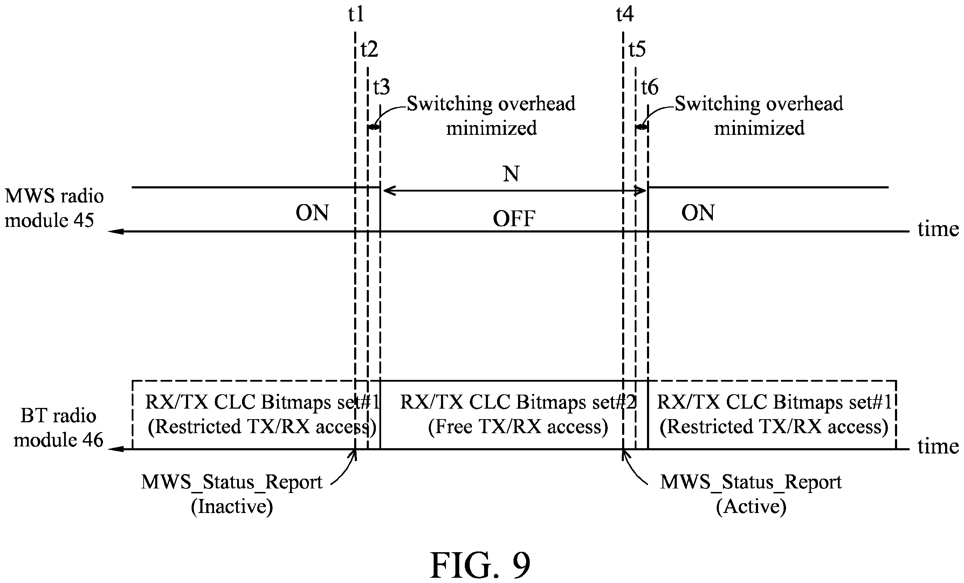

Fig. 9 is a block diagram illustrating detection of operation status changes of the MWS radio module 45 according to an embodiment of the invention. In this embodiment, frame synchronization is performed first, so that the MWS frames are aligned with BT slots in the time domain, and negotiation of RX/TX CLC bitmaps sets is also performed, so that the RX/TX CLC bitmaps sets in the BT radio module 46 and the BT headset 33 are in-sync. As shown in Fig. 9, at time $t1$, the MWS radio module 45 detects that the current activities, e.g., transmitting operations and/or receiving operations, are about to stop at time t3 for a period of time $N$, i.e., its operation status is about to change from active to inactive at time $t3$ for the period of time $N$. Specifically, the MWS radio module 45 may periodically perform the early detection to see if the current activities are about to stop after a predetermined period of time. Also, at time $t1$, the MWS radio module 45 transmits a notification signal to the BT radio module 46 to indicate the operation status change of the MWS radio module 45 in a forthcoming period of time. When receiving the notification signal, the BT radio module 46 determines an indicator indicating at least one of the BT TX and RX CLC bitmaps sets (referred to herein as BT CLC bitmaps sets) which were previously negotiated to the BT headset 33, e.g., the RX/TX CLC bitmaps set#2, according to the to-be-changed operation status of the MWS radio module 45, and then transmits the indicator to the BT headset 33 at time $t2$. When receiving the indicator, the BT headset 33 replies to the BT radio module 46 with an acknowledgement of the indicator, and then switches the currently used BT CLC bitmaps set to the BT CLC bitmaps set indicated by the indicator. When receiving the acknowledgement at time $t3$, the BT radio module 46 correspondingly switches the currently used BT CLC bitmaps set to the BT CLC bitmaps set indicated by the indicator. Similarly, when the MWS radio module 45 detects that the current activities are about to recover at time t6, it transmits another notification signal to the BT radio module 46, at time $t4$, to indicate its operation status change in a forthcoming period of time. In response to the notification signal, the BT radio module 46 determines an indicator indicating at least one of the BT TX and RX CLC bitmaps sets (referred to herein as BT CLC bitmaps sets) which were previously negotiated to the BT headset 33, e.g., the RX/TX CLC bitmaps set#1, according to the to-be-changed operation status of the MWS radio module 45, and then transmits the indicator to the BT headset 33 at time $t5$. When receiving the indicator, the BT headset 33 replies to the BT radio module 46 with an acknowledgement of the indicator, and when the BT radio module 46 receives the acknowledgement at time $t6$, it correspondingly switches the currently used BT CLC bitmaps set to the BT CLC bitmaps set indicated by the indicator. Thus, the switching overhead of the used BT CLC bitmaps set may be minimized, and the schedule of the activities of the BT radio module 46 may be adjusted accordingly. Note that, the BT CLC bitmaps set used by the BT radio module 46 before time t3, e.g., the RX/TX CLC bitmaps set#1, indicates restricted TX/RX access, while the BT CLC bitmaps set used by the BT radio module 46 during time t3 and t6, e.g., the RX/TX CLC bitmaps set#2, indicates free TX/RX access. In other words, before time *t3*, the BT radio module 46 may selectively cancel or add one or more of the allocations of the slots for transmitting and/or receiving operations to prevent mutual interference from/to the MWS radio module 45, and during time *t3* and *t6*, the BT radio module 46 may freely use the allocations of the slots for transmitting and/or receiving operations since no mutual interference may be occurred from/to the MWS radio module 45.

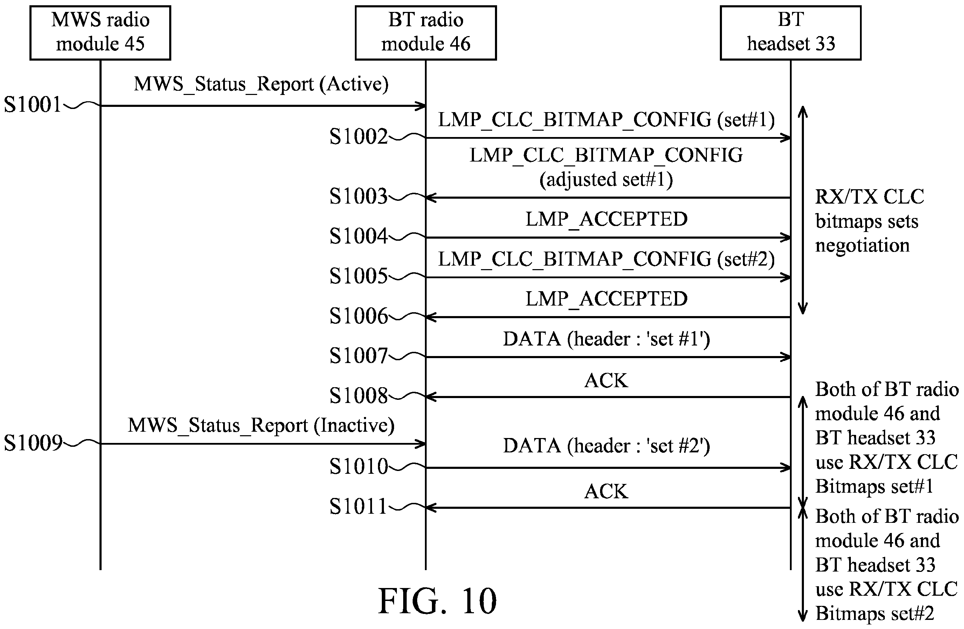

Fig. 10 is a message sequence chart illustrating fast activation of RX/TX CLC bitmaps according to an embodiment of the invention. Similar to Fig. 8, the MWS radio module 45 and the BT radio module 46 are both initially switched off. Later, when the MWS radio module 45 and the BT radio module 46 are switched on, the MWS radio module 45 determines its traffic patterns, including the traffic patterns for the active state and inactive state, and then transmits a notification signal to the BT radio module 46 to indicate the operation status change in a forthcoming period of time (step S1001). In response to the notification signal, the BT radio module 46 obtains the traffic patterns of the MWS radio module 45 via the coexistence-signaling interface 49. Based on the obtained traffic patterns, the BT radio module 46 generates two sets of RX/TX CLC bitmaps for the co-located MWS radio module 45 being in active and inactive states (denoted as RX/TX CLC bitmaps set#1 and set#2, respectively) according to scheduled allocations of slots for the forthcoming transmitting or receiving operations, and then starts negotiating the RX/TX CLC bitmaps sets with the BT headset 33. Specifically, the BT radio module 46 first transmits the RX/TX CLC bitmaps set for active MWS radio module 45, i.e., the RX/TX CLC bitmaps set#1, to the BT headset 33 via an LMP message (e.g., LMP_CLC_BITMAP_CONFIG) (step S1002). The LMP message may further comprise other related information, such as the index of the RX/TX CLC bitmaps set, an offset parameter $D_{CLC}$, an interval parameter $T_{CLC}$, and an initialization flag as mentioned above. When receiving the LMP message, the BT headset 33 determines that the RX/TX CLC bitmaps set contained in the LMP message is not acceptable, and adjusts the RX/TX CLC bitmaps set. Next, the BT headset 33 transmits the adjusted RX/TX CLC bitmaps set to the BT radio module 46 via an LMP message (e.g., LMP_CLC_BITMAP_CONFIG) (step S1003). When receiving the LMP message, the BT radio module 46 replies to the BT headset 33 with an LMP response message (e.g., LMP_ACCEPTED) in response to determining that the adjusted RX/TX CLC bitmaps set is acceptable (step S1004). The BT radio module 46 further transmits the RX/TX CLC bitmaps set for inactive MWS radio module 45, i.e., the RX/TX CLC bitmaps set#2, to the BT headset 33 via an LMP message (e.g., LMP_CLC_BITMAP_CONFIG) (step S1005). When receiving the LMP message, the BT headset 33 replies to the BT radio module 46 with an LMP response message (e.g., LMP_ACCEPTED) in response to determining that the RX/TX CLC bitmaps set is acceptable (step S1006). Note that, the steps of negotiations may be repeated, if there are more than two RX/TX CLC bitmaps sets, until all RX/TX CLC bitmaps sets are negotiated between the BT radio module 46 and the BT headset 33.

After the RX/TX CLC bitmaps set#1 and set#2 have been successfully negotiated between the BT radio module 46 and the BT headset 33, the BT radio module 46 subsequently informs the BT headset 33 for fast activation of a certain set of the previously negotiated RX/TX CLC bitmaps, via Media Access Control (MAC) header signaling. Specifically, the BT radio module 46 selects the RX/TX CLC bitmaps set#1 (e.g., the RX/TX CLC bitmaps as shown in Fig. 5) to be used in a first forthcoming period of time according to the negotiation result and the notification signal, and then performs a transmitting operation with a data header comprising an indicator for RX/TX CLC bitmaps set#1 (step S1007). When receiving the TX data from the BT radio module 46, the BT headset 33 replies to the BT radio module 46 with an acknowledgement of the TX data, and starts to use the RX/TX CLC bitmaps set#1. When receiving the acknowledgement, the BT radio module 46 correspondingly starts to use the RX/TX CLC bitmaps set#1 as well (step S1008). Subsequently, when the MWS radio module 45 detects that its operation status is about to change from active to inactive, it transmits a notification signal to the BT radio module 46 to indicate the operation status change in a forthcoming period of time (step S1009). In response to the notification signal, the BT radio module 46 performs another transmitting operation with a data header comprising an indicator for RX/TX CLC bitmaps set#2 (step S1010). When receiving the TX data from the BT radio module 46, the BT headset 33 replies to the BT radio module 46 with an acknowledgement of the TX data, and switches the currently used RX/TX CLC bitmaps set from set#1 to set#2. Lastly, the BT radio module 46 also switches the currently used RX/TX CLC bitmaps set from set#1 to set#2 when receiving the acknowledgement (step S1011).

Note that, in another embodiment, the RX/TX CLC bitmap set may be predetermined in the BT radio module 46 and the BT headset 33, so that the negotiation of RX/TX CLC bitmaps in Fig. 8 may be skipped and only fast activation of RX/TX CLC bitmaps (i.e., the steps S1010 to S1030) is required to be performed for switching the currently used RX/TX CLC bitmaps between the BT radio module 46 and the BT headset 33. In addition, there may be more than 2 sets of RX/TX CLC bitmaps corresponding to the operation status of the MWS radio module 45. In one embodiment, there may be 3 sets of RX/TX CLC bitmaps corresponding to the active operation status of the MWS radio module 45, wherein the first RX/TX CLC bitmap set corresponds to a full-active operation status of the MWS radio module 45, in which no transmitting or receiving operation of the BT radio module 46 is allowed to ensure that no interference is caused to the transmitting and/or receiving operations of the MWS radio module 45, the second RX/TX CLC bitmap set corresponds to a typical-active operation status of the MWS radio module 45, in which the traffic pattern of the MWS radio module 45 is as shown in Fig. 4, and the third RX/TX CLC bitmap set corresponds to an untypical-active operation status of the MWS radio module 45, in which each MWS frame in the traffic pattern of the MWS radio module 45 contains eight time slots including 4 consecutive TX slots followed by 4 consecutive RX slots; and the invention is not limited thereto.

Furthermore, during the negotiation of RX/TX CLC bitmaps as illustrated in Fig. 8, more than one set of RX/TX CLC bitmaps may be transmitted to the BT slave device to reduce the number of LMP message transmissions and receptions, for the case where the traffic pattern of the MWS radio module 45 rarely changes. For example, 4 sets of RX/TX CLC bitmaps may be transmitted to the BT slave device via an LMP message. Accordingly, the determined indicator as illustrated in Fig. 10 may be used to identify the combination of the 4 sets of RX/TX CLC bitmaps to be used upon the operation status change of the MWS radio module 45. For example, a first combination contains 2 RX/TX CLC bitmap set #1, 1 RX/TX CLC bitmap set #2, and 1 RX/TX CLC bitmap set #3, and a second combination contains 1 RX/TX CLC bitmap set #1, 2 RX/TX CLC bitmap set #2, and 1 RX/TX CLC bitmap set #3, etc.

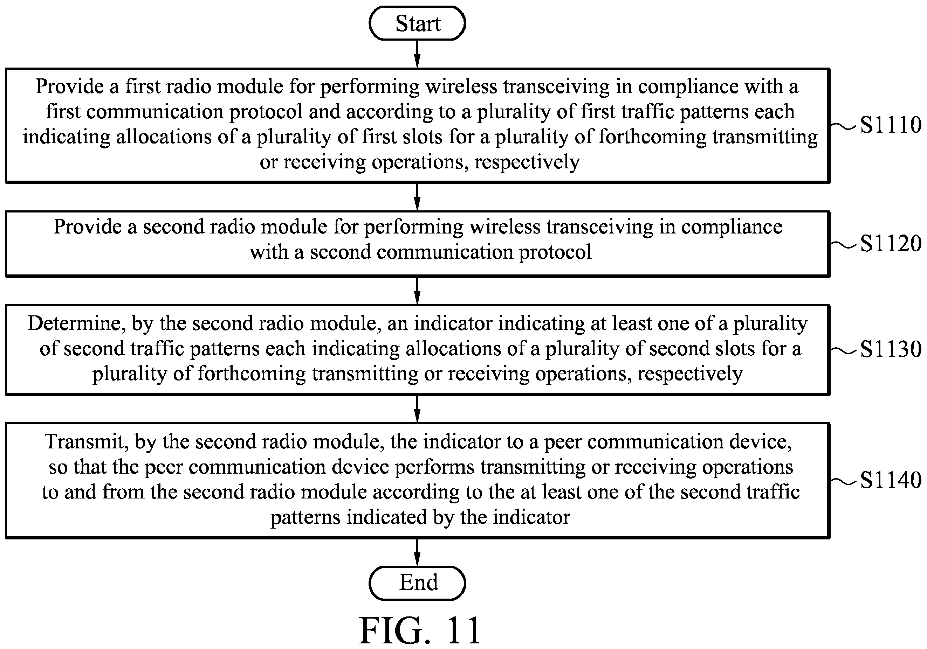

Fig. 11 is a flow chart illustrating an activity coordination method according to an embodiment of the invention. The activity coordination method may be applied in any wireless communication device comprising a plurality of co-located radio modules, i.e., any multi-radio terminals, such as the MRT 32, for coordinating the operations of the multiple radio modules such that some transmitting and/or receiving operations of a radio module may be selectively skipped to prevent mutual interference between the multiple radio modules and to save power. To begin the activity coordination method, a first radio module is provided for performing wireless transceiving in compliance with a first communication protocol and according to a plurality of first traffic patterns which each indicates allocations of a plurality of first slots for a plurality of forthcoming transmitting or receiving operations, respectively (step S1110), and a second radio module is provided for performing wireless transceiving in compliance with a second communication protocol (step S1120). Taking the MRT 32 as an example, the first radio module may refer to the MWS radio module 45 and the second radio module may refer to the BT radio module 46. In one embodiment, the MWS radio module 45 may be a WiMAX radio module that operates at 2.3-2.4 or 2.496-2.690GHz, while the BT radio module 46 operates at 2.402-2.480GHz. In another embodiment, the MWS radio module 45 may be a WiFi radio module that operates at 2.412-2.4835GHz. Subsequently, the second radio module determines an indicator indicating at least one of a plurality of second traffic patterns which each indicates allocations of a plurality of second slots for a plurality of forthcoming transmitting or receiving operations, respectively (step S1130). Specifically, the second slots are aligned with the first slots, and one or more allocations of the second slots are selectively determined for cancellation or addition according to the first traffic patterns. Taking the embodiment of Fig. 6 for example, one of the first traffic patterns may refer to the WiMAX traffic pattern in which each MWS frame contains eight time slots including five RX slots followed by three TX slots, and the second traffic patterns corresponding to the concurrent time slots may refer to the RX CLC bitmap 61 and the TX CLC bitmap 62, wherein the first RX slot in the RX CLC bitmap 61 and the TX slots in the TX CLC bitmap 62 are deliberately given up to prevent mutual interference between the first radio module and the second radio module. After that, the second radio module transmits the indicator to a peer communication device, so that the peer communication device performs transmitting or receiving operations to and from the second radio module according to the at least one of the second traffic patterns indicated by the indicator (step S1140). Specifically, the indicator may be transmitted via a MAC data header in the transmitted data of the second radio module. The peer communication device may further reply to the second radio module with an acknowledgement for acknowledging the reception of the transmitting data, and the indicator is used for selecting at least one of the second traffic patterns when the acknowledgment is replied to. Meanwhile, the second radio module also performs transmitting or receiving operations to and from the peer communication device according to the at least one of the second traffic patterns indicated by the indicator, when receiving the acknowledgement. Note that, in one embodiment, the first traffic patterns and the second traffic patterns may be pre-negotiated from the second radio module to the peer communication device, before the activity coordination method is applied, as described in the embodiment of Fig. 10. In another embodiment, the first traffic patterns and the second traffic patterns may be predetermined in the second radio module and the peer communication device, so that no negotiation of the first and second traffic patterns is required.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). For example, although a WiMAX radio module and a WiFi radio module are used in the detailed description, a Long Term Evolution (LTE) device may be used as a co-located radio module instead. In addition, the BT device co-located with another radio module may be either a BT master or a BT slave. Therefore, the scope of the appended claims should be accorded the broadest interpretation so as to encompass all such modifications and similar arrangements.

## Claims

1. A wireless communication device (32), comprising:

> a first radio module (45), adapted to perform wireless transceiving in compliance with a first communication protocol and according to a plurality of first traffic patterns which each indicates allocations of a plurality of first slots for a plurality of forthcoming transmitting or receiving operations, respectively; and

a second radio module (46), adapted to perform wireless transceiving in compliance with a second communication protocol, determining an indicator indicating at least one of a plurality of second traffic patterns which each indicates allocations of a plurality of second slots for a plurality of forthcoming transmitting or receiving operations, respectively, and adapted to transmit the indicator to a peer communication device (33), so that the peer communication device (33) performs transmitting or receiving operations to and from the second radio module (46) according to the at least one of the second traffic patterns indicated by the indicator,

wherein it is further adapted to determine one or more allocations of the second slots according to the first traffic patterns, prior to the determining of the indicator;

**characterised by** the plurality of second traffic patterns being negotiated between the second radio module (46) and the peer communication device (33) prior to determining the indicator.

2. The wireless communication device (32) as claimed in claim 1, wherein the second radio module (46) is further adapted to perform transmitting or receiving operations to and from the peer communication device (33) according to the at least one of the second traffic patterns indicated by the indicator.

3. The wireless communication device (32) as claimed in claim 1, comprising means adapted to cancel the one or more allocations of the second slots when the receiving operations in the corresponding second slots are estimated to be interfered by the transmitting operations of the first radio module (45), or when data transmissions in the corresponding second slots are estimated to be interfering with the receiving operations of the first radio module (45), or when acknowledgements of data transmissions in the corresponding second slots are estimated to not have been received successfully due to interference from the first radio module (45).

4. The wireless communication device (32) as claimed in claim 1, wherein comprising means adapted to determine the indicator according to an operation status of the first radio module (45).

5. The wireless communication device (32) as claimed in claim 4, wherein the determining of the indicator and the wireless transceiving are performed by the second radio module (46) in response to a change of the operation status of the first radio module (45).

6. The wireless communication device (32) as claimed in claim 4, wherein the first radio module (45) is adapted to generate a notification signal indicating a change of the operation status in a forthcoming period of time, and the determining of the indicator and the wireless transceiving are performed by the second radio module (46) in response to the notification signal and the change of the operation status, respectively.

7. An activity coordination method for a wireless communication device (32) comprising a plurality of co-located radio modules, comprising:

performing by a first radio module (45) wireless transceiving in compliance with a first communication protocol and according to a plurality of first traffic patterns which each indicates allocations of a plurality of first slots for a plurality of forthcoming transmitting or receiving operations, respectively;

performing by a second radio module (46) wireless transceiving in compliance with a second communication protocol;

determining, by the second radio module (46), an indicator indicating at least one of a plurality of second traffic patterns which each indicates allocations of a plurality of second slots for a plurality of forthcoming transmitting or receiving operations, respectively,

wherein one or more allocations of the second slots are selectively determined according to the first traffic patterns; and

transmitting, by the second radio module (46), the indicator to a peer communication device (33), so that the peer communication device performs transmitting or receiving operations to and from the second radio module according to the at least one of the second traffic patterns indicated by the indicator;

**characterised by** the plurality of second traffic patterns are negotiated between the second radio module (46) and the peer communication device (33) prior to determining the indicator.

8. The activity coordination method as claimed in claim 7, further comprising configuring the second radio module (46) to perform transmitting or receiving operations to and from the peer communication device (33) according to the at least one of the second traffic patterns indicated by the indicator.

9. The activity coordination method as claimed in claim 7, wherein one or more allocations of the second slots are canceled when the receiving operations in the corresponding second slots are estimated to be interfered by the transmitting operations of the first radio module (45), or when data transmissions in the corresponding second slots are estimated to be interfering with the receiving operations of the first radio module (45), or when acknowledgements of data transmissions in the corresponding second slots are estimated to not have been received successfully due to interference from the first radio module (45).

10. The activity coordination method as claimed in claim 7, wherein the indicator is determined according to an operation status of the first radio module (45).

11. The activity coordination method as claimed in claim 10, wherein the steps of determining the indicator and configuring the second radio module (46) are performed in response to a change of the operation status of the first radio module (45).

12. The activity coordination method as claimed in claim 10, further comprising generating a notification signal indicating a change of the operation status of the first radio module (45) in a forthcoming period of time, wherein the steps of determining the indicator and configuring the second radio module (46) are performed in response to the notification signal and the change of the operation status, respectively.

**Patentansprüche**

1. Drahtlose Kommunikationsvorrichtung (32), aufweisend:

ein erstes Funkmodul (45), das eingerichtet ist, um drahtloses Senden/Empfangen in Übereinstimmung mit einem ersten Kommunikationsprotokoll und gemäß einer Vielzahl von ersten Verkehrsmustern durchzuführen, die jeweils Zuweisungen von einer Vielzahl von ersten Slots für eine Vielzahl von bevorstehenden Sende- bzw. Empfangsvorgängen anzeigen; und
ein zweites Funkmodul (46), das eingerichtet ist, drahtloses Senden/Empfangen in Übereinstimmung mit einem zweiten Kommunikationsprotokoll sowie Bestimmen eines Indikators, der mindestens eines aus einer Vielzahl von zweiten Verkehrsmustern anzeigt, die jeweils Zuweisungen einer Vielzahl von zweiten Slots für eine Vielzahl von bevorstehenden Sende- bzw. Empfangsvorgängen anzeigen, durchzuführen und das eingerichtet ist, den Indikator an eine Peer-Kommunikationsvorrichtung (33) zu übertragen, so dass die Peer-Kommunikationsvorrichtung (33) Sende- oder Empfangsvorgänge zu und von dem zweiten Funkmodul (46) gemäß dem mindestens einen der zweiten Verkehrsmuster, die durch den Indikator angezeigt werden, durchführt,
wobei es ferner eingerichtet ist, um eine oder mehrere Zuweisungen der zweiten Slots gemäß den ersten Verkehrsmustern vor dem Bestimmen des Indikators zu bestimmen;
**gekennzeichnet durch**
die Vielzahl von zweiten Verkehrsmustern, die zwischen dem zweiten Funkmodul (46) und der Peer-Kommunikationsvorrichtung (33) vor dem Bestimmen des Indikators ausgehandelt werden.

2. Drahtlose Kommunikationsvorrichtung (32) nach Anspruch 1, bei der das zweite Funkmodul (46) des Weiteren eingerichtet ist, um Sende- oder Empfangsvorgänge zu und von der Peer-Kommunikationsvorrichtung (33) gemäß dem mindestens einen der zweiten Verkehrsmuster durchzuführen, die durch den Indikator angezeigt werden.

3. Drahtlose Kommunikationsvorrichtung (32) nach Anspruch 1, aufweisend Mittel, die geeignet sind, die eine oder mehrere Zuweisungen der zweiten Slots aufzuheben, wenn die Empfangsvorgänge in den entsprechenden zweiten Slots durch die Sendevorgänge des ersten Funkmoduls (45) als gestört eingeschätzt werden, oder wenn Datenübertragungen in den entsprechenden zweiten Slots als störend für die Empfangsvorgänge des ersten Funkmoduls (45) eingeschätzt werden, oder wenn Bestätigungen von Datenübertragungen in den entsprechenden zweiten Slots als nicht erfolgreich empfangen aufgrund von Störungen durch das erste Funkmodul (45) eingeschätzt werden.

4. Drahtlose Kommunikationsvorrichtung (32) nach Anspruch 1, bei der diese Mittel aufweist, die eingerichtet sind, um den Indikator gemäß einem Betriebszustand des ersten Funkmoduls (45) zu bestimmen.

5. Drahtlose Kommunikationsvorrichtung (32) nach Anspruch 4, bei der das Bestimmen des Indikators und das drahtlose Senden/Empfangen durch das zweite Funkmodul (46) als Reaktion auf eine Änderung des Betriebszustandes des ersten Funkmoduls (45) durchgeführt werden.

6. Drahtlose Kommunikationsvorrichtung (32) nach Anspruch 4, bei der das erste Funkmodul (45) eingerichtet ist, um ein Benachrichtigungssignal zu erzeugen, das eine Änderung des Betriebszustandes in einer bevorstehenden Zeitspanne anzeigt, und wobei das Bestimmen des Indikators und das drahtlose Senden/Empfangen von dem zweiten Funkmodul (46) als Reaktion auf das Benachrichtigungssignal bzw. die Änderung des Betriebszustandes durchgeführt werden.

7. Aktivitätskoordinationsverfahren für eine drahtlose Kommunikationsvorrichtung (32), die eine Vielzahl von nebeneinander angeordneten Funkmodulen umfasst, aufweisend:

   Durchführen durch ein erstes Funkmodul (45) eines drahtlosen Senden/Empfangens in Übereinstimmung mit einem ersten Kommunikationsprotokoll und gemäß einer Vielzahl von ersten Verkehrsmustern, die jeweils Zuweisungen einer Vielzahl von ersten Slots für eine Vielzahl von bevorstehenden Sende- bzw. Empfangsvorgängen anzeigen;
   Durchführen durch ein zweites Funkmodul (46) eines drahtlosen Senden/Empfangens in Übereinstimmung mit einem zweiten Kommunikationsprotokoll;
   Bestimmen eines Indikators durch das zweite Funkmodul (46), der mindestens eines aus einer Vielzahl von zweiten Verkehrsmustern anzeigt, die jeweils Zuweisungen einer Vielzahl von zweiten Slots für eine Vielzahl von bevorstehenden Sende- bzw. Empfangsvorgängen anzeigen,
   wobei eine oder mehrere Zuweisungen der zweiten Slots selektiv gemäß den ersten Verkehrsmustern bestimmt werden; und
   Übertragen des Indikators durch das zweite Funkmodul (46) an eine Peer-Kommunikationsvorrichtung (33), so dass die Peer-Kommunikationsvorrichtung Sende- oder Empfangsvorgänge zum und vom zweiten Funkmodul gemäß dem mindestens einen der zweiten Verkehrsmuster durchführt, die durch den Indikator angezeigt werden;

   **gekennzeichnet durch**

   die Vielzahl von zweiten Verkehrsmustern, die zwischen dem zweiten Funkmodul (46) und der Peer-Kommunikationsvorrichtung (33) vor dem Bestimmen des Indikators ausgehandelt werden.

8. Aktivitätskoordinationsverfahren nach Anspruch 7, des Weiteren aufweisend Konfigurieren des zweiten Funkmoduls (46), um Sende- oder Empfangsvorgänge zu und von der Peer-Kommunikationsvorrichtung (33) gemäß dem mindestens einen der zweiten Verkehrsmuster durchzuführen, die durch den Indikator angezeigt werden.

9. Aktivitätskoordinationsverfahren nach Anspruch 7, bei dem eine oder mehrere Zuweisungen der zweiten Slots aufgehoben werden, wenn die Empfangsvorgänge in den entsprechenden zweiten Slots durch die Sendevorgänge des ersten Funkmoduls (45) als gestört eingeschätzt werden, oder wenn Datenübertragungen in den entsprechenden zweiten Slots als störend für die Empfangsvorgänge des ersten Funkmoduls (45) eingeschätzt werden, oder wenn Bestätigungen von Datenübertragungen in den entsprechenden zweiten Slots als nicht erfolgreich empfangen aufgrund von Störungen durch das erste Funkmodul (45) eingeschätzt werden.

10. Aktivitätskoordinationsverfahren nach Anspruch 7, bei dem der Indikator gemäß einem Betriebszustand des ersten Funkmoduls (45) bestimmt wird.

11. Aktivitätskoordinationsverfahren nach Anspruch 10, bei dem die Schritte zum Bestimmen des Indikators und zum Konfigurieren des zweiten Funkmoduls (46) als Reaktion auf eine Änderung des Betriebszustandes des ersten Funkmoduls (45) durchgeführt werden.

12. Aktivitätskoordinationsverfahren nach Anspruch 10, des Weiteren aufweisend Erzeugen eines Benachrichtigungssignals, das eine Änderung des Betriebszustandes des ersten Funkmoduls (45) in einem zukünftigen Zeitraum anzeigt, wobei die Schritte des Bestimmens de Indikators und Konfigurierens des zweiten Funkmoduls (46) als Reaktion auf das Benachrichtigungssignal bzw. die Änderung des Betriebszustandes ausgeführt werden.

**Revendications**

1. Dispositif de communication sans fil (32), comprenant :

un premier module radio (45) adapté pour effectuer une émission/réception sans fil conformément à un premier protocole de communication et selon une pluralité de premiers modèles de trafic qui indiquent chacun des attributions d'une pluralité de premiers créneaux pour une pluralité d'opérations d'émission ou de réception à venir ; et

un second module radio (46), adapté pour effectuer une émission/réception sans fil conformément à un second protocole de communication, en déterminant un indicateur indiquant au moins l'un d'une pluralité de seconds modèles de trafic qui indiquent chacun des attributions d'une pluralité de seconds créneaux pour une pluralité d'opérations d'émission ou de réception à venir, respectivement, et adapté pour transmettre l'indicateur à un dispositif de communication homologue (33), de sorte que le dispositif de communication homologue (33) effectue des opérations d'émission ou de réception vers et depuis le second module radio (46) selon le au moins un des seconds modèles de trafic indiqués par l'indicateur, dans lequel il est en outre adapté pour déterminer une ou plusieurs attributions des seconds créneaux selon les premiers modèles de trafic, avant la détermination de l'indicateur ;

**caractérisé par**

la pluralité de seconds modèles de trafic étant négociés entre le second module radio (46) et le dispositif de communication homologue (33) avant la détermination de l'indicateur.

2. Dispositif de communication sans fil (32) selon la revendication 1, dans lequel le second module radio (46) est en outre adapté pour effectuer des opérations d'émission ou de réception vers et depuis le dispositif de communication homologue (33) en fonction du au moins un des seconds modèles de trafic indiqués par l'indicateur.

3. Dispositif de communication sans fil (32) selon la revendication 1, comprenant des moyens adaptés pour annuler les une ou plusieurs attributions des seconds créneaux lorsque les opérations de réception dans les seconds créneaux correspondants sont estimées être perturbées par les opérations de transmission du premier radio (45), ou lorsque des transmissions de données dans les seconds créneaux correspondants sont estimées interférer avec les opérations de réception du premier module radio (45), ou lorsque des accusés de réception de transmissions de données dans les seconds créneaux correspondants sont estimés ne pas avoir été reçus avec succès en raison de l'interférence provenant du premier module radio (45).

4. Dispositif de communication sans fil (32) selon la revendication 1, **caractérisé en ce qu'**il comprend des moyens aptes à déterminer l'indicateur en fonction d'un état de fonctionnement du premier module radio (45).

5. Dispositif de communication sans fil (32) selon la revendication 4, dans lequel la détermination de l'indicateur et l'émission/réception sans fil sont effectuées par le second module radio (46) en réponse à un changement de l'état de fonctionnement du premier module radio (45).

6. Dispositif de communication sans fil (32) selon la revendication 4, dans lequel le premier module radio (45) est adapté pour générer un signal de notification indiquant un changement de l'état de fonctionnement dans une période de temps à venir, et la détermination de l'indicateur et l'émission/réception sans fil sont effectuées par le second module radio (46) en réponse au signal de notification et au changement d'état de fonctionnement, respectivement.

7. Méthode de coordination d'activités pour un dispositif de communication sans fil (32) comprenant une pluralité de modules radio co-localisés, comprenant les étapes consistant à :

effectuer, via un premier module radio (45), une émission-réception sans fil conformément à un premier protocole de communication et selon une pluralité de premiers modèles de trafic qui indiquent chacun des attributions d'une pluralité de premiers créneaux pour une pluralité d'opérations d'émission ou de réception à venir, respectivement ;

effectuer, via un second module radio (46), une émission/réception sans fil conformément à un second protocole de communication ;

déterminer, via le second module radio (46), un indicateur indiquant au moins l'un d'une pluralité de seconds modèles de trafic qui indiquent chacun des attributions d'une pluralité de seconds créneaux pour une pluralité d'opérations d'émission ou de réception à venir, respectivement, dans laquelle une ou plusieurs attributions des seconds créneaux sont déterminées de manière sélective en fonction des premiers modèles de trafic ; et

transmettre, via le second module radio (46), l'indicateur à un dispositif de communication homologue (33), de sorte que le dispositif de communication homologue effectue des opérations d'émission ou de réception vers et depuis le second module radio en fonction du au moins un des seconds les modèles indiqués par l'indicateur ;

**caractérisée par**

la pluralité de seconds modèles de trafic qui sont négociés entre le second module radio (46) et le dispositif de communication homologue (33) avant la détermination de l'indicateur.

8. Méthode de coordination d'activités selon la revendication 7, comprenant en outre la configuration du second module radio (46) pour effectuer des opérations d'émission ou de réception vers et depuis le dispositif de communication homologue (33) selon le au moins un des seconds modèles de trafic indiqués par l'indicateur.

9. Méthode de coordination d'activités selon la revendication 7, dans laquelle une ou plusieurs attributions des seconds créneaux sont annulées lorsque les opérations de réception dans les seconds créneaux correspondants sont estimées être perturbées par les opérations de transmission du premier module radio (45), ou lorsque des transmissions de données dans les seconds créneaux correspondants sont estimées interférer avec les opérations de réception du premier module radio (45) ou lorsque des accusés de réception de données dans les seconds créneaux correspondants sont estimés ne pas avoir été reçus avec succès en raison d'interférences provenant du premier module radio (45).

10. Méthode de coordination d'activités selon la revendication 7, 15, dans laquelle l'indicateur est déterminé en fonction d'un état de fonctionnement du premier module radio (45).

11. Méthode de coordination d'activités selon la revendication 10, dans laquelle les étapes de détermination de l'indicateur et de configuration du second module radio (46) sont réalisées en réponse à un changement de l'état de fonctionnement du premier module radio (45).

12. Méthode de coordination d'activités selon la revendication 10, comprenant en outre la génération d'un signal de notification indiquant un changement de l'état de fonctionnement du premier module radio (45) dans une période de temps à venir, dans laquelle les étapes de détermination de l'indicateur et de configuration du second module radio (46) sont exécutées en réponse au signal de notification et au changement d'état de fonctionnement, respectivement.

FIG. 1 ( PRIOR ART )

FIG. 2 ( PRIOR ART )

EP 3 209 084 B1

Access Node

Multi-Radio
Terminal

30

31

32

BT Headset

33

32

45 — MWS Radio
Module

46 — BT Radio
Module

41 — Transceiver

43 — Transceiver

42 — MWS
Controller

44 — BT
Controller

Coexistence-Signaling Interface — 49

Processor — 47

Memory — 48

# FIG. 3

Traffic pattern of the BT radio module 46

Traffic pattern of the MWS radio module 45

ALIGNMENT

time

time

FIG. 4

Traffic pattern of the
MWS radio module 45

1 MWS Frame = 5 ms

| T X | R X | R X | R X | R X | R X | T X | T X | T X | R X | R X | R X | R X | R X | T X | T X | T X | R X | R X | R X | R X | R X | T X | T X | T X |

→ time

1 BT Slot = 625 $\mu$s

→ time

RX CLC BITMAP 51

| 0 | 1 | 1 | 1 | 1 | 1 | 0 | 0 | 0 | 1 | 1 | 1 | 1 | 1 | 0 | 0 | 0 | 1 | 1 | 1 | 1 | 1 | 0 | 0 |

TX CLC BITMAP 52

| 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |

Byte 0          Byte 1          Byte 2

FIG. 5

EP 3 209 084 B1

Traffic pattern of the
MWS radio module 45

1 MWS Frame = 5 ms

| TX | RX | RX | RX | RX | RX | TX | TX | TX | RX | RX | RX | RX | RX | TX | TX | TX | RX | RX | RX | RX | RX | TX | TX | TX |

time

1 BT Slot = 625 μs

time

RX CLC BITMAP 61

| 0 | 1 | 1 | 1 | 1 | 1 | 0 | 0 | 0 | 1 | 1 | 1 | 1 | 1 | 0 | 0 | 0 | 1 | 1 | 1 | 1 | 1 | 0 | 0 |

TX CLC BITMAP 62

| 1 | 0 | 0 | 0 | 0 | 0 | 1 | 1 | 1 | 0 | 0 | 0 | 0 | 0 | 1 | 1 | 1 | 0 | 0 | 0 | 0 | 0 | 1 | 1 |

Byte 0          Byte 1          Byte 2

FIG. 6

Traffic pattern of the
MWS radio module 45

1 MWS Frame = 5 ms

time

1 BT Slot = 625 $\mu$s

time

RX CLC BITMAP 71

| 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |

TX CLC BITMAP 72

| 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |

Byte 0                    Byte 1                    Byte 2

FIG. 7

FIG. 8

EP 3 209 084 B1

FIG. 9

| MWS radio module 45 | | BT radio module 46 | | BT headset 33 |

S1001 — MWS_Status_Report (Active) →

S1002 — LMP_CLC_BITMAP_CONFIG (set#1) →

S1003 ← LMP_CLC_BITMAP_CONFIG (adjusted set#1)

S1004 — LMP_ACCEPTED →

S1005 — LMP_CLC_BITMAP_CONFIG (set#2) →

S1006 ← LMP_ACCEPTED

RX/TX CLC bitmaps sets negotiation

S1007 — DATA (header : 'set #1') →

S1008 ← ACK

S1009 — MWS_Status_Report (Inactive) →

S1010 — DATA (header : 'set #2') →

S1011 ← ACK

Both of BT radio module 46 and BT headset 33 use RX/TX CLC Bitmaps set#1

Both of BT radio module 46 and BT headset 33 use RX/TX CLC Bitmaps set#2

FIG. 10

```
                    ( Start )
                        |
                        v
  +--------------------------------------------------------+
  | Provide a first radio module for performing wireless   |
  | transceiving in compliance with a first communication  |
  | protocol and according to a plurality of first traffic |   ~S1110
  | patterns each indicating allocations of a plurality of |
  | first slots for a plurality of forthcoming transmitting|
  | or receiving operations, respectively                  |
  +--------------------------------------------------------+
                        |
                        v
  +--------------------------------------------------------+
  | Provide a second radio module for performing wireless  |
  | transceiving in compliance with a second communication |   ~S1120
  | protocol                                               |
  +--------------------------------------------------------+
                        |
                        v
  +--------------------------------------------------------+
  | Determine, by the second radio module, an indicator    |
  | indicating at least one of a plurality of second       |
  | traffic patterns each indicating allocations of a      |   ~S1130
  | plurality of second slots for a plurality of           |
  | forthcoming transmitting or receiving operations,      |
  | respectively                                           |
  +--------------------------------------------------------+
                        |
                        v
  +--------------------------------------------------------+
  | Transmit, by the second radio module, the indicator    |
  | to a peer communication device, so that the peer       |
  | communication device performs transmitting or          |   ~S1140
  | receiving operations to and from the second radio      |
  | module according to the at least one of the second     |
  | traffic patterns indicated by the indicator            |
  +--------------------------------------------------------+
                        |
                        v
                    ( End )
```

# FIG. 11

**EP 3 209 084 B1**

REFERENCES CITED IN THE DESCRIPTION

**Patent documents cited in the description**

- US 12925475 B
- US 61254771 A
- US 61365891 A
- US 2010061326 A1